# EUROPEAN PATENT APPLICATION

(11) **EP 4 748 600 A1**
(43) Date of publication of application: **27.05.2026**
(21) Application number: 24214896.3
(22) Date of filing: 22.11.2024
(51) Int. Cl.: B60J 7/02, B60J 7/043

(54) **ROOF ASSEMBLY**

(71) Applicant: Inalfa Roof Systems Group B.V., 5807 GW Oostrum (NL)
(72) Inventor: NELLEN, Marcel Johan Christiaan, 5807 GW OOSTRUM (NL); JÜNGLING, Rainer Gerhard, 5807 GW OOSTRUM (NL)
(74) Representative: De Vries & Metman

(57) **Abstract**

The invention relates to a roof assembly for a vehicle, including a pair of guide rails, a roof panel movably supported on the guide rails and configured to close the roof opening, each guide rail slidably supporting a respective operating mechanism for the roof panel, each operating mechanism comprising a front mechanism, a tilting mechanism, a locking mechanism, and a driving slide. The operating mechanism further comprises a panel bracket which is pivotally connected to the front lever and slidably connected to the sliding claw. The driving slide is configured for operating the front mechanism on a first side of the panel bracket in the guide rail and for operating the locking mechanism on a second, opposite side of the panel bracket in the guide rail and the tilting mechanism is operable by the locking mechanism on the second side of the panel bracket in the guide rail.

## Description

The present invention relates to a roof system for a vehicle, the vehicle having a fixed roof and a roof opening therein. In particular, the invention relates to a roof system having a closure panel movable between a closed position and one or more opened positions.

### BACKGROUND

With the emergence of electric vehicles, the general layout of cars is changing. The space required for battery packs is commonly found at the bottom of cars, raising the ground level of the passenger compartment and in particular of the seats present therein. However, as the overall aerodynamic front face of the vehicle is to be maintained, the roof is not raised resulting in a reduction of headroom. As a consequence, the height available for a roof system is reduced. To address this, car manufacturers have introduced fixed, stationary glazing panels to obtain the required reduction in what is referred to as Z-package. These stationary panels may provide a visually connecting experience with the exterior surroundings, but lack the flexibility to accommodate for different environmental circumstances, as fresh air on bright sunny mornings and cover on dark, rainy afternoons.

Accordingly, there is a need to provide a roof system that can balance these conflicting requirements.

### SUMMARY OF INVENTION

It is an object of the invention to address the abovementioned requirement.

In one aspect, the invention relates to a roof assembly for a vehicle having a roof opening in a fixed roof, including a pair of guide rails configured to be attached stationary to the fixed roof and to extend in a longitudinal direction substantially parallel to opposite lateral sides of the roof opening, a roof panel movably supported on the guide rails and configured to close the roof opening in a closed position and to be moved at least rearwardly to an opened position in which the roof opening is at least partly opened, the roof panel having a front edge and a rear edge, and each guide rail slidably supporting a respective operating mechanism for the roof panel. Each operating mechanism includes a front mechanism, a tilting mechanism, a locking mechanism, and a driving slide, each capable of at least partly moving in the guide rail in a longitudinal direction. The front mechanism includes a front lever for moving the front edge of the roof panel in a vertical direction, and the locking mechanism includes a locking lever for locking the front mechanism relative to the tilting mechanism, the tilting mechanism being configured for moving the rear edge of the roof panel in a vertical direction and including a sliding claw. The operating mechanism further includes a panel bracket which is pivotally connected to the front lever front mechanism and slidably connected to the sliding claw tilting mechanism. The driving slide is configured for operating the front mechanism on a first side of the panel bracket in the guide rail and for operating the locking mechanism on a second, opposite side of the panel bracket in the guide rail. And the tilting mechanism is operable by the locking mechanism on the second side of the panel bracket in the guide rail.

In a further aspect, the invention relates to a roof assembly wherein the front lever, locking lever and tilting lever are configured to accommodate the panel bracket to extend substantially straight in the longitudinal direction in the guide rail when the roof panel is in the closed position.

In another aspect, the invention relates to a roof assembly wherein the tilting mechanism includes a driving rod for operatively connecting the tilt activation lever to the locking lever. The driving rod is connected to the locking lever and the tilt activation lever on the same side of the panel bracket in the guide rail, or the driving rod is connected to the locking lever on the second side of the panel bracket in the guide rail and connected to the tilt activation lever on the first side of the panel bracket in the guide rail.

The opening travel of a roof panel, i.e. the distance over which a roof panel can be moved when opening, is determined by the load that can be supported. In the case of an exterior slider, wherein a rear mechanism initially performs a tilt and then stays fixed while the roof panel travels further, the force or momentum exerted on the rear mechanism increases with the distance travelled. A front mechanism will lift the front edge out of the closed position and travel together with the roof panel rearward till the opened position is reached. The movement of the roof panel relative to the rear mechanism, also referred to as the tilting mechanism, determines the load that needs to be supported by the rear mechanism.

Use of a tilting mechanism, as e.g. disclosed in DE202010012974U1, may reduce the z-package at the cost of the load and therewith the opening travel of the roof panel that may be supported by the tilting mechanism. Herein the tilting mechanism includes a driving rod for activating a connection lever that is connected indirectly via a sliding claw to a slidable tilting lever. The slidable tilting lever is a tilting lever of which the point around which the lever pivots may be moved via tilting curves. The tilting curves allow to adjust the pivot point when the tilting mechanism is sliding rearward.

Using a front mechanism with slide shoes on a front lever instead of on a panel bracket, as e.g. disclosed in EP3647094B1, allows to reduce the z-package as the vertical lift of the front edge that needs to be provided by slide shoes when moving the roof panel out of or into the closed position is reduced. With slide shoes provided on a lever of the front mechanism, the rotation of the lever may provide the required lift of the front edge.

By providing an alternative locking mechanism, capable of being located at a first, e.g. inwardly located, side wall of a guide rail and capable of operating the connection lever of the tilting mechanism, room is created for re-locating a front lever of a front mechanism to a second, opposite to the first, e.g. outward located, side wall of that guide rail. By further providing an alternative tilting mechanism with at least a part of the driving rod at one side of the guide rail and the slidable tilting lever and tilting curves at an opposite side of the guide rail, the front lever may be located at the same side of the guide rail as the tilting curves and slidable tilting lever. Such configuration provides room for a panel bracket to be positioned in and to extend along the middle or center of the guide rail. Accordingly, a panel bracket may provide an increase in stiffness and/or rigidity, thereby enabling to mitigate the reduction in load and opening travel that can be supported by the tilting mechanism. Furthermore, the panel bracket may then be relieved from accommodating for other components by its shape and form by means of e.g. cut-outs, bends or kinks.

Thus, in order to apply a rear mechanism with slidable tilting lever and a front mechanism with slide shoes, a re-design of the locking mechanism is required in order to be operable. In particular, a locking mechanism may be provided to accommodate the location of the front lever of the front mechanism and the tilt activation lever of the locking mechanism for operating the tilting mechanism on a same side of the panel bracket. More in particular, a driving slide may be provided that is capable of operating the front mechanism and the locking mechanism on different sides of the panel bracket in the guide rail.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a perspective view of an example of a vehicle roof with an open roof assembly;
FIG. 1B illustrates an exploded view of the open roof assembly of Fig. 1A;
FIGS. 2A and 2B are exploded views of an example of an operating mechanism in accordance with the invention for the roof system of Fig. 1B, as viewed from the laterally outside and inside, respectively;
FIG. 3 is a plan view of the operating system of Fig. 2A;
FIGS. 4A and 4B are side views of an example of a tilting mechanism;
Figs. 5A and 5B illustrate the locking mechanism of Figs. 2A and 2B in more detail;
Figs. 5C and 5D illustrate alternative embodiments of a locking mechanism;
Fig. 6A illustrates the operating mechanism of Fig. 2A with the roof panel in the closed position;
Fig. 6B illustrates the operating mechanism of Fig. 2A with the roof panel in a tilt position;
Fig. 6C. illustrates the operating mechanism of Fig. 2A with the roof panel in a position with a front edge raised;
Fig. 6D illustrates the operating mechanism of Fig. 2A with the roof panel in a slide position;
Fig. 6E illustrates the operating mechanism of Fig. 2A with the roof panel in an opened position;
Figs. 7A illustrates another example of an operating mechanism in accordance with the invention for the roof system of Fig. 1B;
Figs. 7B illustrates a cross section of the operating mechanism of Fig. 7A along line A-A';
FIGS. 8A and 8B illustrate another example of a front lever, as viewed from the laterally outside and inside, respectively.

### DETAILED DESCRIPTION

In the following description, spatial references as, for example, front, side and rear, or underneath, below and above, or forward and rearward direction and driving movement, are made with regard to the general orientation of a vehicle, such as a passenger car, and in particular to a driver behind a steering wheel of such as vehicle. In addition, X-, Y- and Z-direction will refer to a direction corresponding to length, width and height of a vehicle. In the figures, a forward driving movement of a vehicle may e.g. be indicated by an arow D, pointing in a direction towards a front side of a vehicle. It will be understood that a roof system may be positioned in one orientation wherein a forward closing and rearward opening direction of a roof panel align respectively with a forward and rearward direction of a vehicle. And in another orientation wherein vice versa a forward closing and rearward opening direction of the roof system align respectively with a rearward and forward direction of a vehicle.

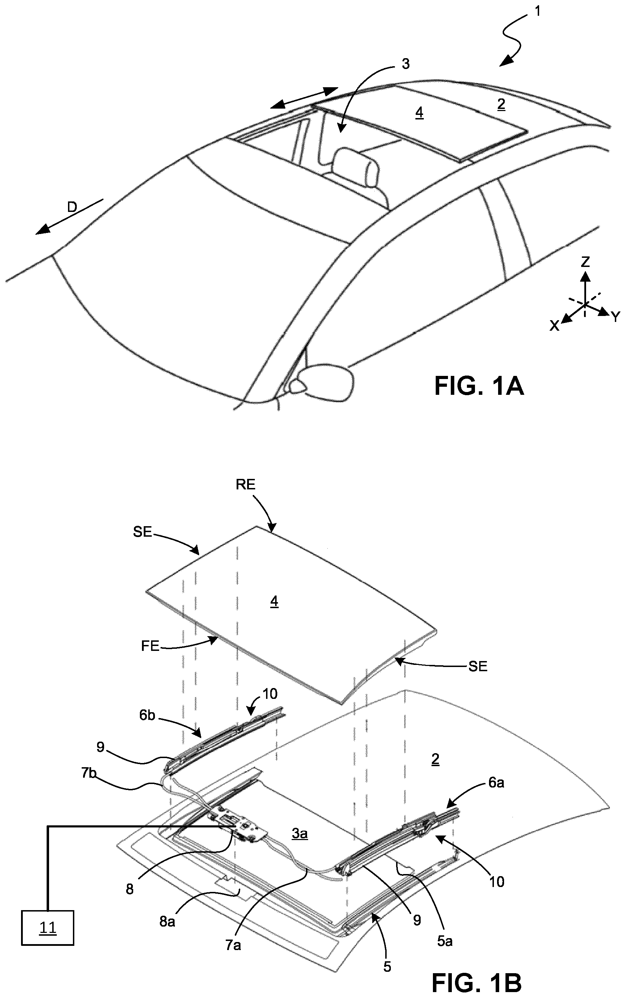

Figs. 1A and 1B illustrate a vehicle roof having an open roof assembly 1 arranged in a fixed roof 2 with a roof opening 3. The open roof assembly 1 comprises a moveable panel 4. The moveable panel 4 is also referred to as a closure member, since the moveable panel 4 is moveable over the roof opening 3 as to enable to open and to close the roof opening 3.

In the illustrated embodiment, the moveable panel 4 may be in a closed position, which is a position wherein the moveable panel 4 is arranged over and closes the roof opening 3 and thus usually is arranged in a plane of the vehicle roof 1. Further, the moveable panel 4 may be in a tilted position, which is a position wherein a rear end RE of the moveable panel 4 is raised as compared to the closed position, while a front end FE of the moveable panel 4 is still in the closed position. Further, the moveable panel 4 may be in an open position, which is a position wherein the moveable panel 4 is slid open and the roof opening 3 is partly or completely exposed. In the open position, for example, both the rear end RE and front end FE may be raised as compared to the closed position.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having a single movable panel 4. In particular, while Fig. 1A shows the open roof assembly 1 in the open position, Fig. 1B is an exploded view of the open roof assembly 1 in a closed position. The roof opening 3 is provided in a frame 5 of the open roof assembly 1. An edge 5a of the frame 5 defines the roof opening 3.

Fig. 1B further illustrates a drive assembly having a first guide assembly 6a, a second guide assembly 6b, a first drive cable 7a, a second drive cable 7b, and a drive motor 8. The first and second guide assemblies 6a, 6b are arranged on respective side ends SE of the roof opening 3 and may each comprise a guide rail 9 and an operating mechanism 10 for supporting the moveable panel 4. The guide rails 9 are coupled to the frame 5, while the operating mechanism 10 comprises moveable parts and is slidably moveable in the guide rail. The first and the second drive cables 7a, 7b are provided between the operating mechanisms 10 of the respective guide assemblies 6a, 6b and the drive motor 8.

The drive cables 7a, 7b couple the drive motor 8 to the operating mechanisms 10 of the respective guide assemblies 6a, 6b such that upon operating the drive motor 8, the operating mechanisms10 start to move. In particular, a core of the drive cable 7a, 7b is moved by the drive motor 8, such as to push or pull on the operating mechanisms 10 of the respective guide assemblies 6a, 6b. Such a drive assembly is well known in the art and is therefore not further elucidated herein. Still, any other suitable drive assembly may be employed as well without departing from the scope of the present invention.

In the illustrated embodiment, the guide assemblies 6a, 6b may start a movement with raising the rear end RE of the moveable panel 4, thereby bringing the moveable panel 4 in the tilted position. Then, from the tilted position, the guide assemblies 6a, 6b may start to slide to bring the moveable panel 4 in the open position.

In the illustrated embodiment, the drive motor 8 is mounted at a recess 8a near or below the front end FE of the moveable panel 4 in the closed position. In another embodiment, the drive motor 8 may be positioned at any other suitable position or location.

A control unit 11 is schematically illustrated and is operatively coupled to the drive motor 8. The control unit 11 may be any kind of processing unit, either a software controlled processing unit or a dedicated processing unit, like an ASIC, as well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 8 and thus the moveable roof assembly 1.

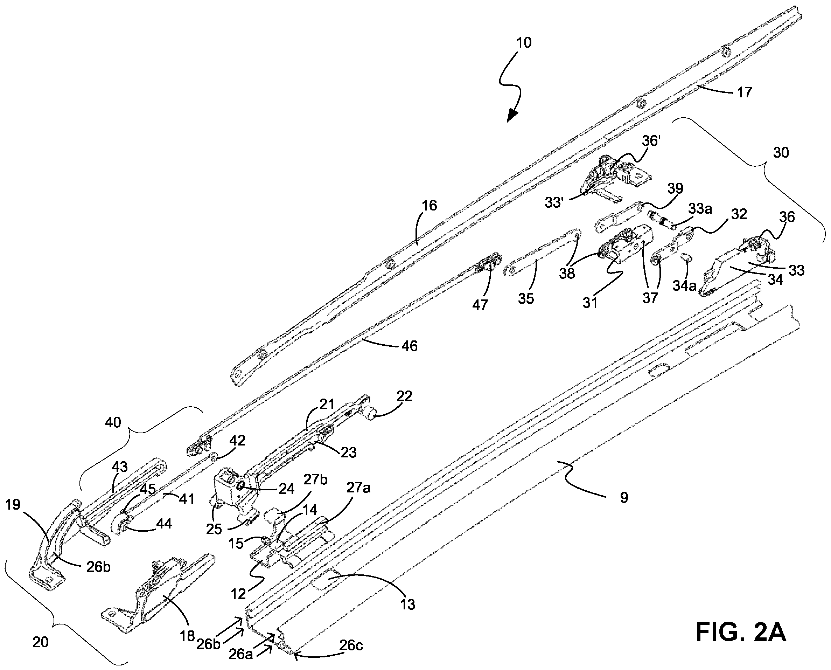

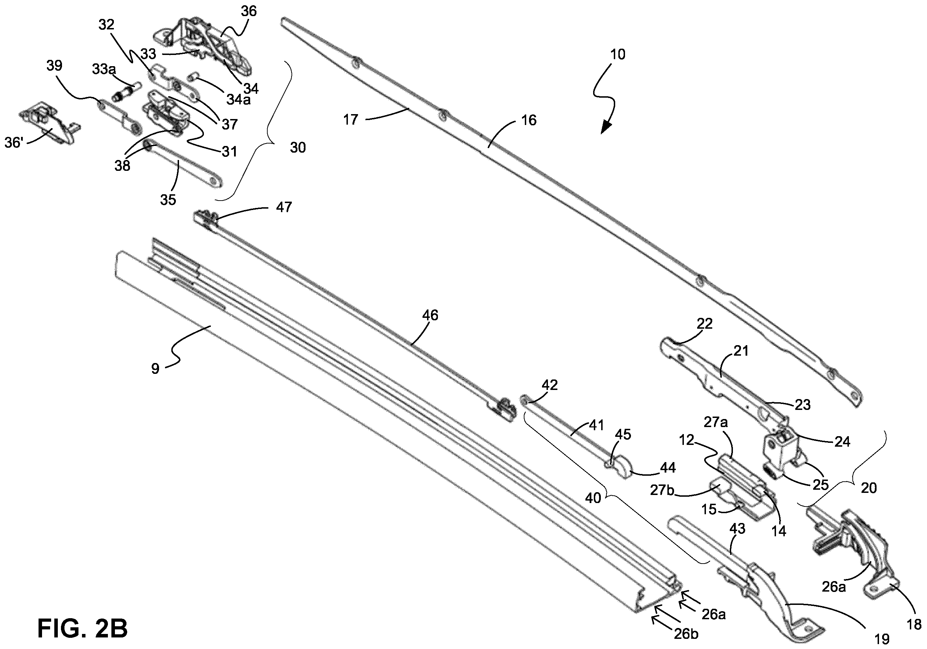

Referring to Figs. 2A and 2B, exploded views of an example of a guide assembly of the roof system of Fig. 1B, as viewed respectively from the laterally outside and inside, are illustrated. The guide assembly of Figs. 2A and 2B, which includes the guide rail and operating mechanism, may be positioned on one side, e.g. the left, of the vehicle. On the other side of the vehicle, e.g. on the right, the guide rail and operating mechanism will be similar, but mirrored, as is known in the art. Each guide rail 9 slidably supports a respective operating mechanism 10 for the roof panel 4. Each operating mechanism 10 includes a front mechanism 20, a tilting mechanism 30, a locking mechanism 40, and a driving slide 12. Each of these components of the operating mechanism 10 is capable of at least partly moving in the guide rail 9 in a longitudinal direction. Each guide rail 9 has an extrusion profile with side walls, for example from aluminum, having one or more guide grooves 26a, 26b provided in respective side walls. Each guide rail further includes a cable channel 26c in one of the side walls for one of the drive cables 7a, 7b. The guide rail may be straight or slightly bent downwards to follow the downward curvature of fixed roof 2 of vehicle 1.

The front mechanism 20 includes a front lever 21 for moving the front edge of the roof panel 4 in a vertical direction. The locking mechanism 40 includes a locking lever 41 for locking the front mechanism 20 relative to the tilting mechanism 30. And the tilting mechanism 30 is configured for moving the rear edge of the roof panel 4 in a vertical direction, while the tilting mechanism 30 includes a sliding claw 31.

The operating mechanism 10 further includes a panel bracket 16 which is pivotally connected, in this example by front pivot 24, to the front lever 21 and slidably connected to the sliding claw 31. Thereto, the panel bracket 16 may be provided with a flange 17 for slidably connecting to the sliding claw 31. Accordingly, the panel bracket 16, to which the roof panel may be mounted, will slide along with the front lever of the front mechanism. The panel bracket may include a side bracket and mechanism bracket, wherein the side bracket is directly mounted to the roof, for example by glue or encapsulation, and the mechanism bracket is pivotally connected to the front lever and slidably connected to the sliding claw.

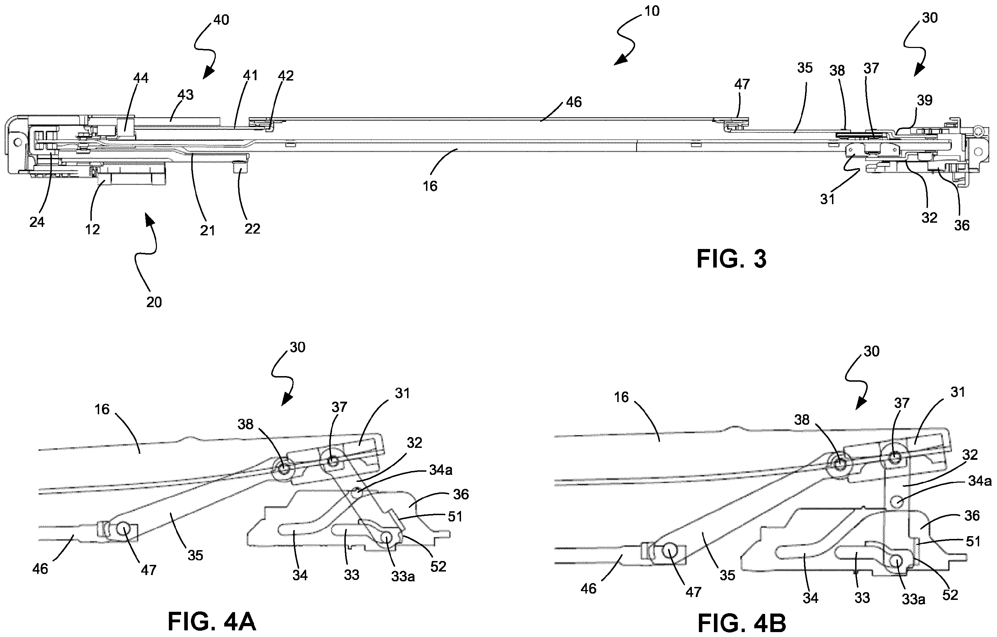

The driving slide 12 is configured for operating the front mechanism 20 on a first side of the panel bracket 16 in the guide rail 9 and for operating the locking mechanism 40 on a second, opposite side of the panel bracket 16 in the guide rail 9, as may be seen in the plan view of Fig. 3. Thereto, the sliding drive extends underneath the front mechanism. The tilting mechanism 30 is operable by the locking mechanism 40 on the second side of the panel bracket 16 in the guide rail 9.

In the example of Figs. 2A and 2B, two guide inserts 18, 19 are provided to be positioned at the front of the guide rail and to extend therein. The front lever 21 includes at least one slide shoe 25, in this example two slide shoes 25 on each side of the front lever 21, which are slidably supported by the respective guide inserts 18, 19. The front lever 21 further includes a lifting curve or track 23 to be operated by the driving slide 12. Thereto the driving slide 12 includes a driving cam 14 for cooperating with the lifting curve 23 for lifting the front lever 21. The driving slide 12 may further include one or more slide fingers 27a, 27b to be slidably supported by one of the guide grooves 26a, 26b, respectively, in the guide rail 9. In the example of Figs. 2A and 2B, there are two guide grooves in each side wall of the guide rail 9. Some of the one or more guide grooves 26a, 26b may extend into the guide inserts 18, 19 for supporting the slide shoes 25 of the front lever 21. The front lever 21 further includes a pivot pin 22 that is slidably guided in a side wall of the guide rail 9, for example in one of the guide grooves 26a. The position of the pivot pin 22 determines the point about which the front lever 21 will pivot in the vertical direction. When the driving cam 14 slides rearward through the lifting curve 23, the front lever will start to pivot vertically about the pivot pin 22 when the driving cam 14 slides through a downward directed end of the lifting curve 23.

Referring to Figs. 2A, 2B and 3, the tilting mechanism 30 includes a tilting lever 32, tilting curves 33, 34 and a tilt activation lever 35. The tilting curves 33, 34 may be provided in a side wall of the guide rail or in a separate guide curve element 36 to be mounted stationary in the side wall as illustrated. As may be seen in more detail in Fig. 3, the front lever 21, tilting curves 33, 34 and tilting lever 32 are located on the first side of the panel bracket 16 in the guide rail 9, while the locking lever 41 and the tilt activation lever 35 are located on the second side of the panel bracket 16 in the guide rail 9. Accordingly, the front lever 21, locking lever 41 and tilting lever 32 are configured to accommodate the panel bracket 16 to extend substantially straight in longitudinal direction in the guide rail 9 when the roof panel 4 is in the closed position. In this embodiment, the tilt activation lever 35 and driving rod 46 are also configured to accommodate the panel bracket 16 to extend substantially straight in longitudinal direction. Furthermore, when the roof panel is in the closed position the panel bracket 16 may be positioned in the middle of the guide rail 9, and thus more or less be centered between the side walls of the guide rail.

The tilt activation lever 35 and the tilting lever 32 are each pivotally connected to the sliding claw 31 via separate, spaced apart pivots 37, 38, such that the tilt activation lever 35, sliding claw 31 and tilting lever 32 extend one behind the other when the panel bracket 16 is in the closed position, as seen in the plan view of Fig. 3.

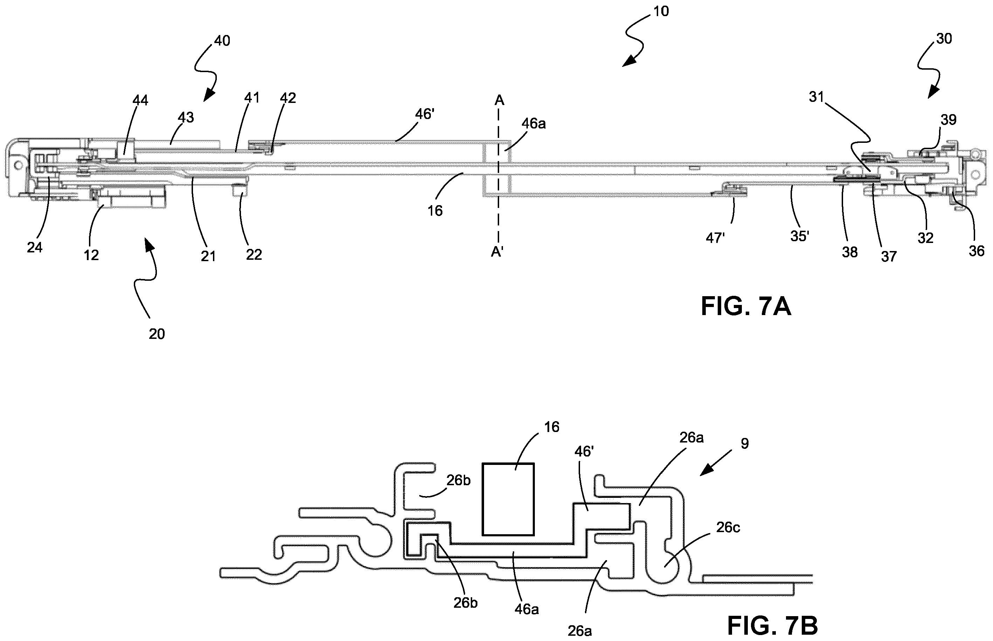

The tilting mechanism 30 further includes a driving rod 46 for operatively connecting the tilt activation lever 35 to the locking lever 41. In this embodiment, the connection includes a rear rod pivot 47 which allows the tilt activation lever 35 to pivot relative to the driving rod 46. In this embodiment, the driving rod 46 is located on the second side of the guide rail, as are the locking lever 41 and tilt activation lever 35. In other embodiments, as will be explained in relation to Fig. 7A, only a part of the driving rod 46 may be located at the second side of the guide rial 9.

The tilting curves 33, 34, in this embodiment provided in the guide curve element 36, include a lift curve 33 and a pivot curve 34. The tilting lever 32 includes a first, lower pivot 33a that is guided in the lift curve 33 and an upper, second pivot 34a that is guided in the pivot curve 34. The lift curve 33 and the pivot curve 34 are configured such that, when parts of the tilting mechanism 30 are moving in the longitudinal direction, the lift curve 33 determines a point of pivoting of the tilting lever 32 and the pivot curve 34 pivots the tilting lever 32.

The rearward end of the lift curve 33 determines the point of pivot about which the tilting lever 32 may be pivoted. The shape or path of the lift curve determines the travel of the point of pivot during longitudinal movement of parts of the tilting mechanism. The tilt curve may have a front portion 33b and a rear portion 33c, which may provide an offset in height. In the embodiment of Figs. 2A and 2B, the lift curve rear portion 33c is lower than the front portion 33b. Accordingly, during rearward travel of the pivot point, the tilt lever 32, sliding claw 31 and tilt activation lever 35 are moved from a first position located in z-direction between the bottom and top of the guide rail to a position wherein the lower end of the tilting lever is closer to the bottom of the guide rail and thus lower than the first position, and the sliding claw is tilted above the top of the guide rail and hence above the first position.

In other embodiments, the lift curve rear portion may be higher than the front portion. In such embodiments, the point of pivot is raised during rearward movement in the lift curve. This facilitates reaching an increase in height or to reach the same height with a shorter tilting lever

The choice for a particular offset in z-position of the lift curve front portion and lift curve rear portion facilitates to accommodate differences in curvature of a vehicle roof, and/or a required height, as well as available length of the guide rail and/or a desired z-package of the guide rail and roof assembly. In addition, there may be no offset in z-direction between the front and rear portion. In some examples, the lift curve may just be a single circle or hole for snugly fitting the first, lower pivot pin.

In order to increase stability of the tilting mechanism 30, an auxiliary support lever 39 may be provided. Movement of the auxiliary support lever 39 may be synchronized with the tilting lever 32, by providing a guide curve 33', corresponding to the lift curve 33, in a side wall of the guide rail or in a guide curve element 36' that is to be mounted stationary in the side wall of the guide rail 9. The auxiliary support lever 39 may share the first, lower pivot 33a with the tilting lever 32.

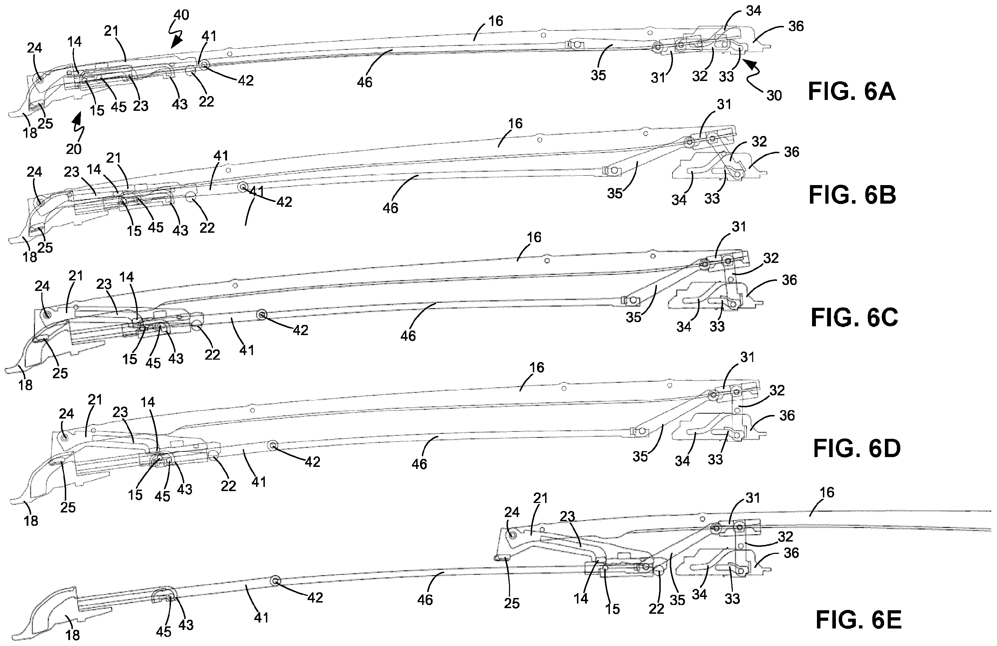

Referring to Figs. 4A and 4B, a side view of the tilting mechanism is shown in more detail. The lift curve 33 and first, lower pivot 33a and the pivot curve 34 and second, upper pivot 34a are shown with the tilting lever 32 in positions corresponding to the roof panel in the tilt position and the opened position, respectively, as in Figs. 6B and 6D. The position of the tilting mechanism as in the opened position may already be reached when the tilting mechanism is unlocked from the front mechanism.

Further it is shown that the tilting lever 32 may include a locking finger 51 for locking the tilting lever 32 behind a cam portion 52 of the guide curve element 36. When the tilting lever 32 pivots from the tilt position to the slide position, the upper pivot 34a may become free from the pivot curve 34 and thus no longer be supported in X-direction and/or Z-direction. The locking finger 51 is configured, during the pivoting, to contribute and take over the support in X-direction and thus secures the pivot point 33a of the tilting lever for a longitudinal movement and/or an excess pivoting movement.

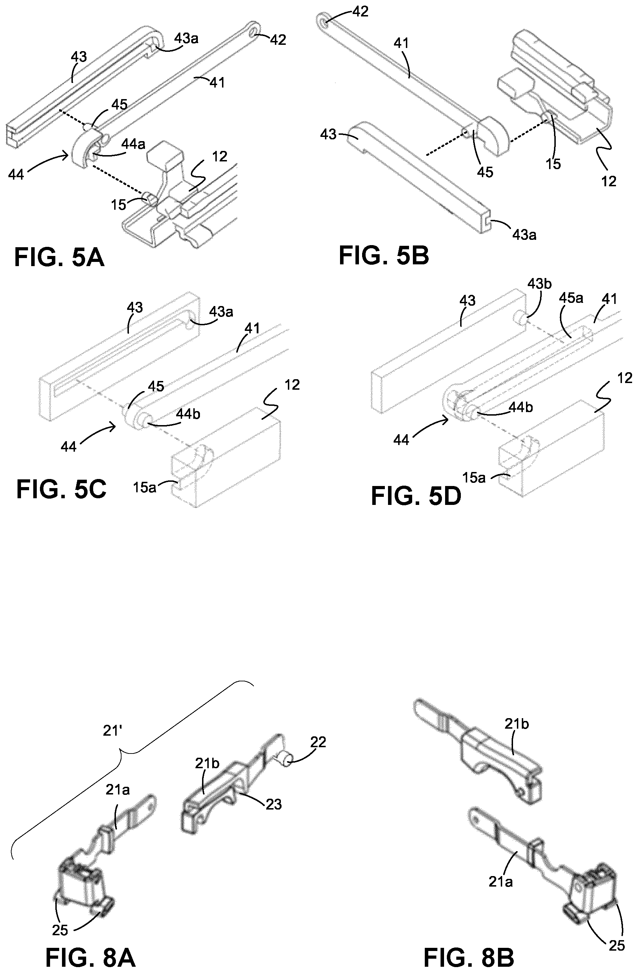

Referring to Fig. 5A and 5B, the locking mechanism of Fig. 2A and 2B is shown in more detail. The locking lever 41 includes a hinge member 42 that is slidably supported in the guide rail 9, a locator member 45 slidably supported by a locator 43, and a locking joint 44. The driving slide 12 may lock with the locking joint 44 by a locking member 15. In this example, the locking joint 44 includes a curve 44a and the locking member 15 is a cam. In other examples, as schematically illustrated in Figs. 5C and 5D, the curve and cam may be interchanged as the locking joint 44 may include a cam 44b and the locking member may include a curve 15a. The locator 43 may be provided directly in the guide rail or, as in the example of Figs.2A and 2B, as part of one of the guide inserts 19, and be positioned and extend in the guide rail 9. The locator 43 includes, in this example, a locator pin slot 43a and the locator member 45 includes a locator pin. In other examples, as schematically illustrated in Fig. 5D, these may be interchanged, in that the locator 43 includes a pin 43b and the locator member is a pin slot 45a. As may be understood, any combination of these alternative embodiments of locking joint and locator as illustrated in Figs. 5A-5D may be considered. Furthermore, in yet other embodiments, instead of vertical drop at a rear end of the locator, the curve may be directed upwards. As long as a relative movement in vertical or horizontal direction of locking lever and guide rail is obtained, the locking mechanism 40 may be configured to unlock the tilting mechanism 30 from the front mechanism 20. For example, a horizontal relative movement may be achieved by rotating the elements of the examples of Fig. 5C or 5D by 90° degrees.

In the embodiments of Figs. 2A, 2B and 5A, 5B, the locking joint 44 is positioned at or near a front end of the locking lever 41. The locator member 45 is also positioned at or near the front end of the locking lever 41. In other embodiments, the locator member 45 may be positioned more rearward, yet at least in front of the hinge member 42 of the locking lever 41. The locking joint 44 may be positioned further rearward, yet at least in front of the hinge member 42, and, preferably, locking joint 44 is located forward of locator member 45.

Referring to Figs. 6A-D, illustrating a side view of the operating mechanism in consecutive positions when moving from the closed position to the opened position, the operation of the roof assembly will be discussed. Fig. 6A illustrates the operating mechanism with the roof panel in the closed position. Fig. 6B illustrates the operating mechanism with the roof panel in a tilt position. In this tilt position the rear edge of the roof panel is partially tilted. Fig. 6C. illustrates the operating mechanism with the front edge raised and the rear edge of the roof panel further tilted. In this position the operating mechanism maintains the front mechanism locked to the tilting mechanism. Fig. 6D. illustrates the operating mechanism with the roof panel in a slide position. In this position the front edge is fully raised and the rear edge is fully tilted and the operating mechanism has the front mechanism unlocked from the tilting mechanism. Fig. 6E illustrates the operating mechanism with the roof panel in the opened position.

In the closed position, the tilting mechanism 30 is in a rest position, wherein the tilting lever 32, sliding claw 31 and tilt activation lever 35 lie one behind the other in the guide rail. The locking mechanism 40 is in a forwardmost position as supported at the front by the locking lever 41 and the locator 43. And the front mechanism 20 is in a forwardmost position as supported by the front lever in the guide inserts at the front of the guide rail.

When the driving slide 12 is moving rearward out of the closed position in the longitudinal direction, the locking mechanism 40 initially locks the front mechanism 20 to the tilting mechanism 30 by guiding the locking lever 41 which is driven by the driving slide 12. Thereto, the locking lever 41 is pushed rearward by the driving slide 12 via the locking joint 44, and the locator member 45 is guided rearward through the locator 43. The locking lever being connected to the tilt activation lever, operates the tilting mechanism 30 and brings it into tilt. Thus, the tilt activation lever 35 pushes the tilting lever 32 via the sliding claw rearward, wherein the pivots 33a, 34a travelling through the lifting curves 33, 34 respectively cause the tilting lever 32 to tilt, thereby raising the sliding claw.

With the rearward movement of the driving slide 12 also the front mechanism 20 is operated, as the driving cam 14 is guided through the lifting curve 23 and lifts the front lever 21. The length of the lifting curve 23 and of the locator 43 determine the relative timing of these movements of tilting mechanism 30 and front mechanism 20.

When the driving slide 12 is moving further rearward in the longitudinal direction, the locking mechanism 40 unlocks the front mechanism 20 from the tilting mechanism 30 by halting the locking lever 41 and releasing the driving slide 12 from the locking lever 41. Thereto, the locking lever 41 is pushed rearward by the driving slide 12, whereby the locator member 45 is guided rearward through the locator 43 until it reaches an end thereof. At this end, the locator 43 halts the locking lever 41 via a vertical, relative movement of the locator member 45 and locator 43. In this example, the locator member 45 drops downward and is halted. In other embodiments, the locking lever may be halted by a horizontal or lateral, relative movement of the locator 43 and locator member 45.

With the relative movement of locator 43 and locator member 45, the locking lever 41 changes position, here about an angle, relative the guide rail 9 via its hinge member 42, and consequently the position of the locking joint 44 relative to the locking member 15 changes too. This enables release of the locking member 15 from the locking joint 44 when the driving slide 12 is moved further rearward. Accordingly, the front mechanism 20 is unlocked from the tilting mechanism 30 and the roof panel is in the slide position, i.e. a position that allows the roof panel to slide further rearward.

Moving the driving slide 12 further rearward moves the front mechanism 20 along with it and allows the panel bracket 16 to slide through the sliding claw 31, and consequently slides the roof panel 4 to the opened position.

As may be understood, when moving the roof panel from the opened position to the closed position, the driving slide 12 is moved forward and the operations as described above are performed in reverse manner. In particular, when the driving slide 12 is moving forward in the longitudinal direction, the locking mechanism 40 locks the front mechanism 20 to the tilting mechanism 30 by catching the driving slide 12 and guiding the locking lever 41. Hence, the locking member 15 is caught by the locking joint 44, causing a relative movement of locking member 15 and locking joint 44 and thereby of the locking lever 41. The locking lever is then guided via its locator member 45 in the locator 43 towards the closed position.

Referring again to Fig. 2A, the guide rail 9 may further include, in a bottom or side wall of the guide rail 9, an unlocking slot 13, as in this example, for receiving a portion of the locator member 45 when the locator 43 halts the locking lever 41. In addition, or instead, the unlocking slot 13 may be configured for receiving a portion of the locking joint 44. When the members move relative to one another, the unlocking slot 13 may provide for additional room of relative movement, where otherwise the relative movement would be limited by the bottom or the side wall of the guide rail.

Referring to Figs. 7A and 7B, another example of an operating mechanism 10 for the roof system of Fig. 1B is illustrated. Fig. 7A shows a plan view of the operating mechanism 10 and Fig. 7B shows a cross section of the operating mechanism 10 along line A-A' in Fig. 7A. The same elements as in Fig.3 have the same reference numbers. In this embodiment, the tilt activation lever 35' is located at the same side wall of the guide rail 9 as the tilting lever 32. The tilt activation lever 35' is connected to the sliding claw 31 via pivot 38' and to the driving rod 46' via pivot 47'. In order to have the locking mechanism 40 be able to operate the tilting mechanism 30, the driving rod 46' is differs from that of the embodiment of Fig.3 and crosses the guide rail 9. Thereto, the driving rod 46' includes a bridge portion 46a that can accommodate the panel bracket 16. In operation, the bridge portion 46a will slide underneath the panel bracket 16. Further shown in Fig.7B are guide grooves 26a, 26b and cable channel 26c. Accordingly, the driving rod 46' extends underneath the panel bracket 16 in the closed position.

In the embodiments described above the sliding claw of the tilting mechanism and the flange of the panel bracket cooperate to facilitate the sliding movement of the roof panel. Thereto, the sliding claw has one or more fingers that grab around the flange. In other embodiments, it may be the case that the sliding claw includes a flange and the panel bracket includes the one or more fingers for grabbing around the flange for facilitating the sliding movement of the roof panel.

Furthermore, the pivots 37, 38 may be positioned on the sliding claw 31 in vertical sense below the panel bracket 16, or these may be positioned on either side of the sliding claw on different sides adjacent to the panel bracket in a horizontal sense.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. For example, referring to Figs. 8A and 8B, another example of a front lever 21' is illustrated. Herein, the front lever 21' includes two parts, a sliding front lever 21a and a lifting front lever 21b. The sliding and lifting parts 21 a, 21b are each hingeably connected to the roof panel. In this manner, the sliding front lever will provide the sliding movement of the panel into and out of the closed position. The lifting front lever will provide the vertical lifting or pivoting movement of the panel.

In particular, features presented and described in separate dependent claims may be applied in combination and any advantageous combinations of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. Roof assembly for a vehicle (1) having a roof opening (3) in a fixed roof (2), comprising:
a pair of guide rails (9) configured to be attached stationary to the fixed roof (2) and to extend in a longitudinal direction substantially parallel to opposite lateral sides of the roof opening (3), a roof panel (4) movably supported on the guide rails (9) and configured to close the roof opening (3) in a closed position and to be moved at least rearwardly to an opened position in which the roof opening (3) is at least partly opened, the roof panel (4) having a front edge and a rear edge;
each guide rail (9) slidably supporting a respective operating mechanism (10) for the roof panel (4),
each operating mechanism (10) comprising a front mechanism (20), a tilting mechanism (30), a locking mechanism (40), and a driving slide (12), each capable of at least partly moving in the guide rail (9) in a longitudinal direction;
the front mechanism (20) comprising a front lever (21) for moving the front edge of the roof panel (4) in a vertical direction,
the locking mechanism (40) comprising a locking lever (41) for locking the front mechanism (20) relative to the tilting mechanism (30),
the tilting mechanism (30) comprising a sliding claw (31) and a tilting lever (32) configured for moving the rear edge of the roof panel (4) in a vertical direction;
the operating mechanism (10) further comprising a panel bracket (16) which is pivotally connected to the front lever (21) and slidably connected to the sliding claw (31);
wherein the driving slide (12) is configured for operating the front mechanism (20) on a first side of the panel bracket (16) in the guide rail (9) and for operating the locking mechanism (40) on a second, opposite side of the panel bracket (16) in the guide rail (9); and
wherein the tilting mechanism (30) is operable by the locking mechanism (40) on the second side of the panel bracket (16) in the guide rail (9).

2. Roof assembly according to claim 1,
wherein the front lever (21), locking lever (41) and tilting lever (32) are configured to accommodate the panel bracket (16) to extend substantially straight in longitudinal direction in the guide rail (9) when the roof panel (4) is in the closed position.

3. Roof assembly according to claim 1 or 2, wherein,
when the driving slide (12) is moving rearward in the longitudinal direction, the locking mechanism (40) unlocks the front mechanism (20) from the tilting mechanism (30) by halting the locking lever (41) and releasing the driving slide (12) from the locking lever (41); and
when the driving slide (12) is moving forward in the longitudinal direction, the locking mechanism (40) locks the front mechanism (20) to the tilting mechanism (30) by catching the driving slide (12) and guiding the locking lever (41).

4. Roof assembly according to any of the preceding claims, the locking lever (41) comprising:
a hinge member (42) being slidably supported in the guide rail (9), a locator member (45) being slidably supported by a locator (43), and a locking joint (44), and
wherein the driving slide (12) locks with the locking joint (44) by a locking member (15).

5. Roof assembly according to claim 4, wherein the locking joint (44) and locking member (15) comprise a locking cam (15, 44b) and locking curve (44a, 15a).

6. Roof assembly according to claim 4 or 5, wherein the locator (43) and locator member (45) comprise a locator pin slot (43a, 45a) and a locator pin (45, 43b).

7. Roof assembly according to any of claims 4-6, wherein
the locator (43) halts the locking lever via a vertical, relative movement of the locator member (45) and locator (43), or
wherein the locator (43) halts the locking lever via a horizontal or lateral, relative movement of the locator member (45) and locator (43).

8. Roof assembly according to claim 7, wherein
the guide rail (9) comprises an unlocking slot (13) for receiving a portion of the locking joint (44) and/or of locator member (45) when the locator (43) halts the locking lever (41) in a bottom or side wall of the guide rail (9).

9. Roof assembly according to any of claims 4-8, wherein
the locking joint (44) is positioned at or near a front end of the locking lever (41), or at least in front of the hinge member (42) of the locking lever (41); and/or
wherein the locator member (45) is positioned at or near the front end of the locking lever (41).

10. Roof assembly according to any of the preceding claims, the tilting mechanism (30) further comprising tilting curves (33, 34) and a tilt activation lever (35), and
wherein the front lever (21), tilting curves (33, 34) and tilting lever (32) are located on the first side of the panel bracket (16) in the guide rail (9); and
the locking lever (41) is located on the second side of the panel bracket (16) in the guide rail (9); and
the tilt activation lever (35) is located on the first side or on the second side of the panel bracket (16) in the guide rail (9).

11. Roof assembly according to claim 10, wherein
the tilt activation lever (35) and the tilting lever (32) are each pivotally connected to the sliding claw (31) via separate, spatially apart pivots (37, 38), such that the tilt activation lever (35), sliding claw (31) and tilting lever (32) extend one behind the other when the panel bracket (16) is in the closed position.

12. Roof assembly according to claim 10 or 11, wherein
the tilting curves (33, 34) comprise a lift curve (33) and a pivot curve (34), the tilting lever (32) comprising a first, lower pivot (33a) guided in the lift curve (33) and an upper, second pivot (34a) guided in the pivot curve (34),
wherein the lift curve (33) and the pivot curve (34) are configured such that, when the tilting mechanism (30) is at least partly moving in the longitudinal direction, the lift curve (33) determines the pivot point of the tilting lever (32) [a point of pivoting] and the pivot curve (33) pivots the tilting lever (32).

13. Roof assembly according to any of claims 10 -12, the tilting lever (32) further comprising a locking finger for locking the tilting lever for a longitudinal movement.

14. Roof assembly according to any of claims 10 -13, the tilting mechanism (30) further comprising a driving rod (46, 46') for operatively connecting the tilt activation lever (35, 35') to the locking lever (41); and
wherein the driving rod (46) is connected to the locking lever (41) and the tilt activation lever (35) on the same side of the panel bracket (16) in the guide rail (9); or
wherein the driving rod (46, 46') is connected to the locking lever (41) on the second side of the panel bracket in the guide rail (9) and connected to the tilt activation lever (35, 35') on the first side of the panel bracket in the guide rail (9).

15. Roof assembly according to any of the preceding claims, the front lever (21) comprising
at least one slide shoe (25) slidably supported by at least one respective guide insert (18, 19);
a lifting curve (23) and a pivot pin (22); and
wherein the driving slide (12) further comprises a driving cam (14) cooperating with the lifting curve (23) for vertically pivoting the front lever (21) about the pivot pin (22).
